# EUROPÄISCHE PATENTSCHRIFT

(11) **EP 3 575 597 B1**
(45) Veröffentlichungstag und Bekanntmachung des Hinweises auf die Patenterteilung: **19.04.2023**
(21) Anmeldenummer: 19000227.9
(22) Anmeldetag: 14.05.2019
(51) Int. Cl.: F03D 80/20, F03D 7/02, F03D 7/04

(54) **VERFAHREN ZUM BETREIBEN VON MINDESTENS EINER WINDENERGIEANLAGE SOWIE ABSCHALTEINRICHTUNG FÜR MINDESTENS EINE WINDENERGIEANLAGE**
METHOD FOR OPERATING AT LEAST ONE WIND TURBINE AND CUT-OFF DEVICE FOR AT LEAST ONE WIND TURBINE
PROCÉDÉ DE FONCTIONNEMENT D'AU MOINS UNE ÉOLIENNE AINSI QUE DISPOSITIF D'ARRÊT POUR AU MOINS UNE ÉOLIENNE

(30) Priorität: 01.06.2018 DE 102018004386
(43) Veröffentlichungstag der Anmeldung: 04.12.2019
(73) Patentinhaber: Hartmund, Marcus, 24994 Osterby (DE)
(72) Erfinder: Hartmund, Marcus, 24994 Osterby (DE)
(74) Vertreter: Weidner Stern Jeschke

(56) Entgegenhaltungen:
- WO-A1-2009/030252
- WO-A1-2018/009265
- US-A1- 2015 115 610
- VERKUIJLEN E ET AL: "SHADOW HINDRANCE BY WIND TURBINES", EUROPEAN WIND ENERGY CONFERENCE, XX, XX, 1. Januar 1985 (1985-01-01), Seiten 356-361, XP000921398,
- Mausolf Gregor: "Windräder: SMS stoppt Schattenwurf - KÜS magazin", , 15 September 2015 (2015-09-15), XP055903707, Retrieved from the Internet: URL:https://www.kues-magazin.de/windraeder -sms-stoppt-schattenwurf/ [retrieved on 2022-03-21]
- Ausgabe 13: "Umwelt Handbuch Windenergie MONIKA AGATZ", , 13 December 2016 (2016-12-13), XP055903719, Retrieved from the Internet: URL:http://www.windenergie-handbuch.de/wp- content/uploads/2017/03/Windenergie-Handbu ch-2016.pdf [retrieved on 2022-03-21]

## Beschreibung

Die Erfindung betrifft ein Verfahren zum Betreiben einer Windenergieanlage gemäß dem Oberbegriff des Anspruchs 1. Die Erfindung betrifft weiter eine Abschalteinrichtung zur Abschaltung von mindestens einer Windenergieanlage gemäß dem Oberbegriff des Anspruchs 12.

Rotierende Rotorflügel von Windenergieanlagen erzeugen bei Sonnenschein sich periodisch bewegende Schatten, die von Anwohnern im Umkreis der Windenergieanlagen als flackernde Helligkeitsschwankungen wahrgenommen werden und je nach Dauer des Schattenwurfs zu einer erheblichen Beeinträchtigung ihrer Lebensqualität führen können. Nach derzeitigen Erkenntnissen ist eine erhebliche Belästigung an einem schützenswerten oder maßgeblichen Immissionsort im Umkreis von einer oder mehreren Windenergieanlagen gegeben, wenn am Immissionsort die Schattenwurfbelastung die behördlich vorgeschriebenen Grenzwerte übersteigt. Maßgebliche Immissionsorte sind schutzwürdige Räume, wie Wohnräume, Schlafräume, Büroräume, Praxisräume, Arbeitsräume, Unterrichtsräume sowie direkt an Gebäuden beginnende Außenflächen, z.B. Terrassen und Balkone, die schutzwürdigen Räumen tagsüber zwischen 6 und 22 Uhr gleichgestellt sind. Die obigen Erkenntnisse finden ihren Niederschlag in den gesetzlichen Bestimmungen oder Richtlinien für die Genehmigung von Windenergieanlagen, wonach bei einer Überschreitung der genannten maximalen Schattenwurfzeiten an einem der betrachteten Immissionsorte im Umkreis von einer oder mehreren Windenergieanlagen sämtliche Windenergieanlagen abgeschaltet werden müssen, um an diesem Immissionsort weiteren Schattenwurf zu verhindern. Zu diesem Zweck sind Windenergieanlagen oder Windparks in der Nähe von bewohnten Gebieten häufig mit einer Schattenwurf-Abschalteinrichtung ausgestattet, die meist als separates Abschaltmodul installiert wird und mit einer Anlagensteuerung kommuniziert. Die Abschalteinrichtung ist in der Regel mit einem oder mehreren Lichtsensoren zur Messung der Intensität des Sonnenlichts ausgestattet. Aus der gemessenen Lichtintensität und den geographischen Koordinaten der Standorte der Windenergieanlagen und der maßgeblichen Immissionsorte berechnet die Abschalteinrichtung, wann für jeden Immissionsort die genehmigten Schattenwurfzeiten überschritten werden. Wenn im Tagesverlauf mehrere Windenergieanlagen an einem maßgeblichen Immissionsort Schattenwurf verursachen, werden die Schattenwurfzeiten aufaddiert.

Nach Überschreitung der genehmigten Schattenwurfzeiten muss eine Abschaltung der Windenergieanlage oder Windenergieanlagen selbst dann vorgenommen werden, wenn sich an dem maßgeblichen Immissionsort überhaupt keine Personen befinden, z.B. in Wohngebäuden während der Abwesenheit der Bewohner, in Unterrichtsräumen während der Ferien oder in Büroräumen an Wochenenden und an Feiertagen. Da durch eine Abschaltung der Ertrag einer Windenergieanlage erheblich sinkt, haben Betreiber von Windenergieanlagen ein Interesse daran, solche Abschaltungen so weit wie möglich zu vermeiden.

Ein Verfahren und eine Abschalteinrichtung der eingangs genannten Art sind bereits aus der US 2015/115610 A1 bekannt. An den maßgeblichen Immissionsorten positionierte Schattenwurf-Überwachungseinrichtungen umfassen neben einem akustischen Sensor einen hochempfindlichen Lichtsensor, mit dem Schattenwurf-Ereignisse erfasst werden können. Die Daten von den Sensoren werden in Form von elektrischen Signalen per Funk, das Internet oder andere Kommunikationskanäle zu einer mit der Abschalteinrichtung kommunizierenden Basiseinheit übertragen, die im Falle einer Erfassung von Schattenwurf kann z.B. durch eine Abschaltung der Windenergieanlage für eine Reduzierung des Schattenwurfs sorgen kann. Jedoch sind auch dort die zuvor genannten Nachteile vorhanden.

Die WO 2018/009265 A1 lehrt, zur Modellierung des von einer Windenergieanlage erzeugten Schattenwurfs z.B. in der Nähe eines maßgeblichen Immissionsorts ein Windenergieanlagenmodell aufzustellen und mittels zweier Lichtsensoren die Position der Sonne in Bezug zum Modell sowie den vom Modell verursachten Schattenwurf am Immissionsort zu messen.

Die WO 2009/030252 A1 lehrt eine Schattenwurf-Abschalteinrichtung für eine Windenergieanlage, bei der mit einem nach Osten und mit einem nach Westen ausgerichteten Lichtsensor die direkte und die indirekte Lichtintensität der Sonne gemessen und miteinander verglichen werden und bei der eine Abschaltung der Windenergieanlage vorgenommen wird, wenn das Ergebnis des Vergleichs einen vorbestimmten Schwellenwert übersteigt. Weitere Beispiele für Lösungen aus dem Stand der Technik sind in den folgenden Dokumenten zu finden: "Windräder: SMS stoppt Schattenwurf - KÜS magazin", (2015-09-15), [XP055903707], und "Umwelt Handbuch Windenergie", (2016-12-13), [XP055903719].

Andererseits kann die Akzeptanz von Windenergieanlagen bei Anwohnern verbessert werden, wenn ein störender Schattenwurf nicht erst dann beendet wird, wenn eine erhebliche Belästigung vorliegt, sondern unverzüglich, oder wenn es unter bestimmten, für den Anwohner wichtigen Umständen gar nicht erst zu einem störenden Schattenwurf kommt, zum Beispiel wenn an einem maßgeblichen Immissionsort eine Feier stattfindet oder wenn ein Anwohner im Garten oder auf der Terrasse Mittagschlaf halten möchte.

Ausgehend hiervon liegt der Erfindung die Aufgabe zugrunde, ein Verfahren und eine Abschalteinrichtung der eingangs genannten Art dahingehend zu verbessern, dass einerseits aus der Sicht der Betreiber unnötige Abschaltungen so weit wie möglich vermieden werden können, andererseits jedoch jeglicher Schattenwurf an einem Immissionsort verhindert werden kann, falls dieser von einem Anwohner als störend angesehen wird.

Mit anderen Worten trachtet die Erfindung danach, Betriebs- und Abschaltzeiten von Windenergieanlagen besser an die Bedürfnisse sowohl der Betreiber und der Anwohner anzupassen, als dies mit bekannten Verfahren und Anlagen möglich ist.

Zur Lösung der Aufgabe wird erfindungsgemäß vorgeschlagen, dass das Signal als Anwohnersignal von einem Anwohner bedarfsgerecht erzeugt werden kann, wenn der Schattenwurf am Immissionsort vom Anwohner als störend empfunden wird.

Die Windenergieanlage ist vorzugsweise sowohl mit der erfindungsgemäßen Abschalteinrichtung und mit einer herkömmlichen Abschalteinrichtung ausgestattet, die mit derselben Hardware implementiert werden. Dadurch kann für jeden Immissionspunkt die gewünschte Vorgehensweise hinterlegt werden, d.h. ob eine Abschaltung durch ein Anwohnersignal oder bei einer Überschreitung von Schattenwurfgrenzwerten ausgelöst werden soll.

Die Übertragung von Anwohnersignalen über das Telefon- oder Mobilfunknetz umfasst im Rahmen der vorliegenden Erfindung auch die Übertragung von Anwohnersignalen über das Internet oder ein Intranet, da auch hierfür ein Telefon- oder Mobilfunknetz genutzt wird.

Der Erfindung liegt der Gedanke zugrunde, bei gegenseitigem Einverständnis von Anlagenbetreiber und Anwohnern die bisher erst bei erheblichen Belästigungen vorgenommenen Abschaltungen mindestens teilweise durch bedarfsgerechtere Abschaltungen zu ersetzen, die nur dann ausgelöst werden, wenn an einem Immissionsort Schattenwurf verursacht wird und dieser Schattenwurf von einem Anwohner als störend empfunden wird. In diesem Fall kann der Anwohner mit dem erfindungsgemäßen Verfahren dafür sorgen, dass die Schattenwurf verursachende Windenergieanlage zeitnah und nicht erst nach Überschreiten einer maximalen Schattenwurfzeit von etwa 30 Minuten abgeschaltet wird.

Der Begriff Anwohner umfasst hier auch Personen, die sich nur vorübergehend im Umkreis einer Windenergieanlage aufhalten, zum Beispiel Arbeitnehmer, die in einem Büro im Umkreis der Windenergieanlage arbeiten, oder Lehrer, die in einer Schule im Umkreis der Windenergieanlage unterrichten.

Wenn andererseits Schattenwurf an einem Immissionsort nicht als störend empfunden wird, zum Beispiel, weil sich niemand in den vom Schattenwurf betroffenen Räumlichkeiten aufhält, braucht die den Schattenwurf verursachende Windenergieanlage anders als bei den bekannten Verfahren nicht abgeschaltet werden, weil ohne eine Störung von Anwohnern kein Anwohnersignal erzeugt und zum Modem übertragen wird.

Eine besonders bevorzugte Ausgestaltung der Erfindung sieht vor, dass das Anwohnersignal ein beim Modem eingehender Anruf ist, der von einem Telefon, einem Mobiltelefon oder einer auf einem Computer gespeicherten Anruf-Software erzeugt wird. So können zur Kommunikation mit dem Modem bei den Anwohnern gewöhnlich vorhandene Telefone, Mobiltelefone und Computer genutzt werden, so dass sich das Verfahren sehr preiswert umsetzen lässt.

Erfindungsgemäß umfasst das Anwohnersignal eine Kennung zur Identifizierung oder Authentifizierung des Anwohners oder Anrufers, die nach dem Eingang des Anwohnersignals zuerst mit einem Satz von gespeicherten Kennungen verglichen wird, wobei nur eine der gespeicherten Kennungen eine Abschaltung auslösen kann, nicht jedoch eine andere Kennung. Im Fall eines Anrufs ist die Kennung bevorzugt eine Anrufer-ID des Telefons oder Mobiltelefons oder eines Voice-over-Internet-Protokolls (VoIP). Insbesondere dann, wenn das Anwohnersignal von einer Software oder Anwendung (App) erzeugt wird, kann die Kennung alternativ oder zusätzlich auch ein Passwort sein oder neben der Anrufer-ID ein Passwort umfassen.

Damit dem Anwohner durch die Übertragung des Anwohnersignals keine Kosten entstehen, wenn es sich bei dem Anwohnersignal um einen Anruf handelt, weist das Modem den Anruf vorzugsweise ab und leitet nur die Kennung des Anrufers zur Auswertung an die Abschalteinrichtung weiter.

Die Erfindung sieht vor, dass das Anwohnersignal zugleich zur Ermittlung des jeweiligen Immissionsortes genutzt wird, von welchem das Anwohnersignal stammt, nämlich indem zusammen mit jeder gespeicherten Kennung der jeweils zugehörige Immissionsort gespeichert wird und indem bei der Überprüfung einer Kennung der Immissionsort mit abgerufen wird, der für die gespeicherte Kennung hinterlegt ist. Eine Abschaltung der Windenenergieanlage wird nur dann ausgelöst, wenn es sich zum einen bei der Kennung um eine der gespeicherten Kennungen handelt und wenn zum anderen eine von einem Rechner der Abschalteinrichtung vorgenommene Berechnung ergibt, dass die Windenergieanlage an dem zur Kennung zugehörigen Immissionsort Schattenwurf verursacht.

Um sicherzustellen, dass auch bei Störungen des Telefon- oder Mobilfunknetz oder der Telefon- oder Mobilfunkverbindung von Anwohnern mit dem Modem an den jeweils maßgeblichen Immissionsorten zumindest keine erheblichen Belästigungen durch Schattenwurf auftreten können, überwacht die Abschalteinrichtung, ob eine ordnungsgemäße Verbindung mit dem Telefon- und/oder Mobilfunknetz besteht und ob das Telefon- und/oder Mobilfunknetz ordnungsgemäß funktioniert und schaltet auf eine vorprogrammierte Abschaltroutine um, wenn dies nicht der Fall ist.

Vorzugsweise löst die Abschalteinrichtung eine Abschaltung einer Windenergieanlage aus, wenn von mindestens einem Immissionsort im Umkreis der Windenergieanlage ein Anwohnersignal beim Modem eingeht und eine daraufhin von der Abschalteinrichtung vorgenommene Prüfung ergibt, dass die Windenergieanlage an diesem Immissionsort Schattenwurf verursacht. Dies wird aus den geografischen Koordinaten der Windenergieanlage und des Immissionsortes sowie bevorzugt aus der aktuellen Lichtintensität der Sonnenstrahlung berechnet. Bei der Berechnung werden der kalendarische Sonnenaufgang, der kalendarische Sonnenuntergang und die Bahn der Sonne über den Himmel am aktuellen Tag berücksichtigt.

Wenn die Windenergieanlage Teil eines Windparks mit mehreren Windenergieanlagen ist, von denen mehrere an dem Immissionsort Schattenwurf verursachen, wird eine Abschaltung von jeder der am Immissionsort Schattenwurf verursachenden Windenergieanlagen ausgelöst.

Die Abschaltung wird bevorzugt sofort ausgelöst, wenn die Windenergieanlage am Immissionsort bereits Schattenwurf verursacht, kann jedoch auch zeitverzögert ausgelöst werden, sobald es zum nächsten Auftreten von Schattenwurf am Immissionsort kommt. Auf diese Weise kann zum Beispiel ein Anwohner, der aus Erfahrung weiß, dass eine Windenergieanlage am Nachmittag an seinem Wohnhaus Schattenwurf verursachen wird, schon am Vormittag durch Absetzen eines Anwohnersignals sicherstellen, dass dies an dem fraglichen Nachmittag nicht der Fall sein wird.

Um sicherzustellen, dass eine Windenergieanlage nur dann abgeschaltet wird, wenn sie an dem Immissionsort, von dem aus das Anwohnersignal eingeht, störenden Schattenwurf verursacht, sieht eine weitere bevorzugte Ausgestaltung der Erfindung vor, dass nach jedem Eingang eines Anwohnersignals berechnet wird, ob an dem zum Anwohnersignal zugehörigen Immissionsort überhaupt Schattenwurf verursacht wird, und eine Abschaltung nur dann ausgelöst wird, wenn dies auch der Fall ist.

Diese Berechnung wird vorzugsweise laufend oder in kurzen Zeitabständen vorgenommen, um die Windenergieanlage sofort abzuschalten, sobald am Immissionsort Schattenwurf verursacht wird, und um die Windenergieanlage sofort wieder anzufahren, sobald am Immissionsort kein Schattenwurf mehr verursacht wird.

Vorzugsweise wird das Verfahren so implementiert, dass ein beim Modem eingehendes Anwohnersignal dafür sorgt, dass die Abschalteinrichtung für den zugehörigen Immissionsort am aktuellen Tag ganz oder nur während einer einstellbaren Zeitdauer eine immissionsortbezogene Abschaltroutine aktiviert. Wenn während dieser Zeitdauer eine Windenergieanlage am Immissionsort Schattenwurf verursacht, sorgt die Abschaltroutine für eine sofortige oder zeitverzögerte Abschaltung dieser Windenergieanlage.

Solange beim Modem kein Anwohnersignal von einem Immissionsort eingeht, hat dies zur Folge, dass für diesen Immissionsort keine Aktivierung der immissionsortbezogenen Abschaltroutine erfolgt. In diesem Fall löst die Abschalteinrichtung im Falle einer Überschreitung von Schattenwurfgrenzwerten an dem Immissionsort keine Abschaltung einer Windenergieanlage oder von Windenergieanlagen aus. Dies gilt selbst dann, wenn am Immissionsort die genehmigten Grenzwerte überschritten werden.

Damit sich im Streitfall nachvollziehen lässt, ob ein Anwohner die Abschaltung einer Windenergieanlage ausgelöst hat, oder warum trotz eines Anwohnersignals die Windenergieanlage nicht abgeschaltet wurde, werden vorzugsweise sowohl die beim Modem eingehenden Anwohnersignale als auch die daraus resultierenden Abschaltungen protokolliert.

Im Folgenden wird die Erfindung anhand eines in der Zeichnung dargestellten Ausführungsbeispiels näher erläutert.
Fig. 1 zeigt eine schematische Ansicht einer Windenergieanlage, die an einem Immissionsort Schattenwurf verursacht;
Fig. 2 zeigt ein Beispiel eines Bereichs, in dem die Windenergieanlage Schattenwurf verursacht, sowie drei im Umkreis der Windenergieanlage gelegene Immissionsorte;
Fig. 3 zeigt eine schematische Ansicht einer Anlagensteuerung der Windenergieanlage sowie von Mitteln zur Durchführung des erfindungsgemäßen Verfahrens;
Fig. 4 zeigt ein Beispiel von zwei sich überlappenden Bereichen, in denen zwei Windenergieanlagen Schattenwurf verursachen, sowie jeweils drei im Umkreis von jeder Windenergieanlage gelegene Immissionsorte.

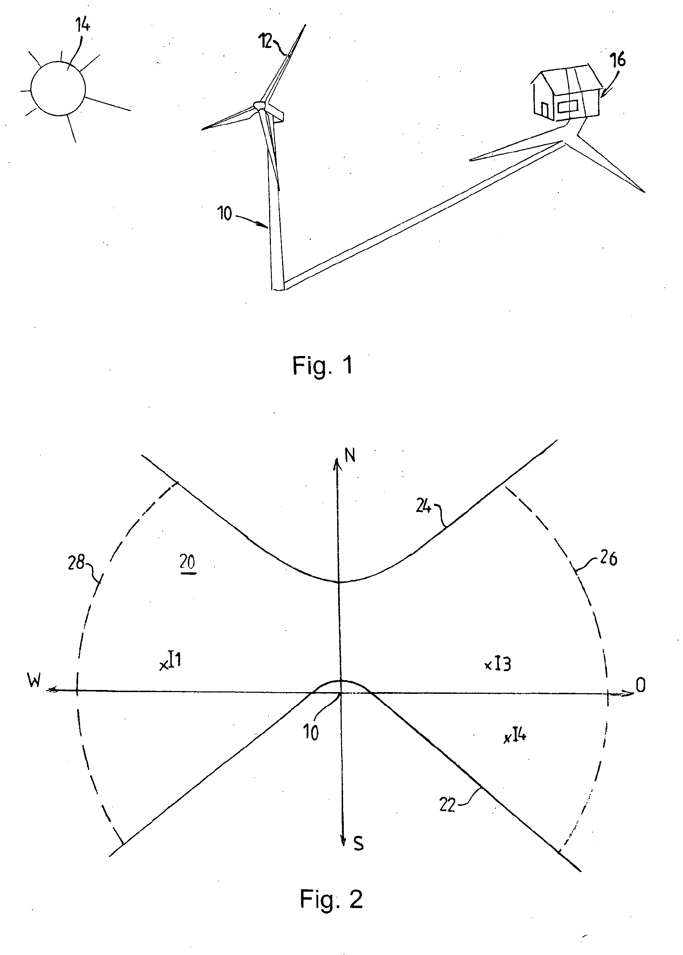

Wie am besten in Fig. 1 am Beispiel einer Windenergieanlage 10 dargestellt, verursacht der Betrieb von Windenergieanlagen bei Sonnenschein periodischen Schattenwurf. Der Schattenwurf wird von den Rotorblättern 12 der Windenergieanlage 10 erzeugt, wenn sich die rotierenden Rotorblätter 12 zwischen der Sonne 14 und einem im Umkreis der Windenergieanlage 10 gelegenen Ort befinden, an dem dann Schattenwurf-Immissionen auftreten. Sofern es sich bei diesem Immissionsort um einen maßgeblichen Immissionsort I handelt, zum Beispiel ein Wohngebäude 16, in dem Anwohner der Windenergieanlage 10 leben, kann der Schattenwurf zu erheblichen Belästigungen der Anwohner im Sinne behördlicher Vorschriften führen.

Fig. 2 zeigt den Bereich 20 im Umkreis der Windenergieanlage 10, in dem derartige Belästigungen durch Schattenwurf auftreten können. Der Standort der Windenergieanlage 10 befindet sich im Schnittpunkt der Koordinatenachsen. Nach Süden S und nach Norden N wird der Bereich 20 jeweils durch eine hyperbolische Kurve 22, 24 begrenzt, welche die südliche bzw. nördliche Schattengrenze bei höchstem Sonnenstand am 21. Juni bzw. bei tiefstem Sonnenstand am 21. Dezember markiert. Nach Osten O und Westen W wird der Bereich 20 durch zwei Kreislinien 26, 28 begrenzt Die Kreislinien 26, 28 markieren die jeweilige Belästigungsgrenze, von wo an Schattenwurf nicht mehr als Belästigung angesehen wird. Drei innerhalb des Bereichs 20 liegende Immissionsorte, z.B. Wohnhäuser, sind mit I1, I2, I3 bezeichnet.

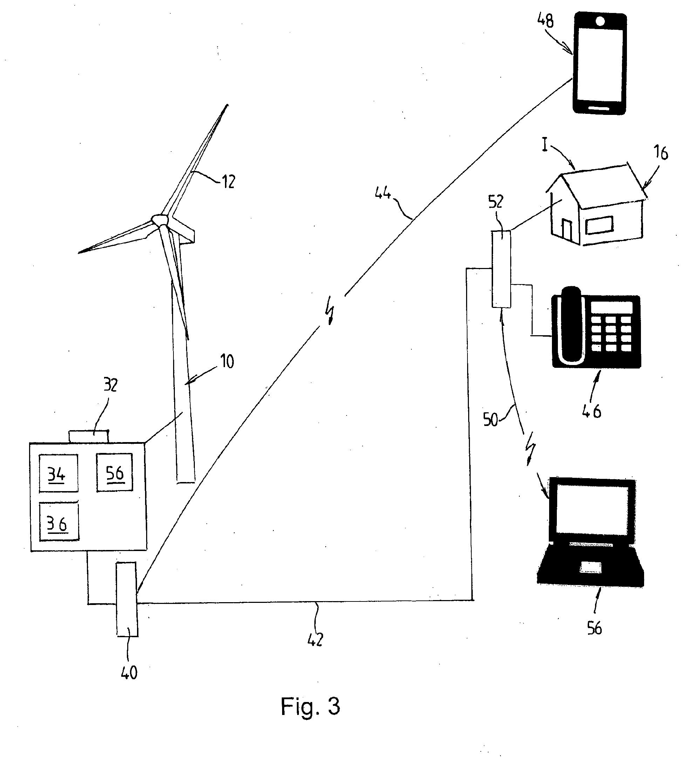

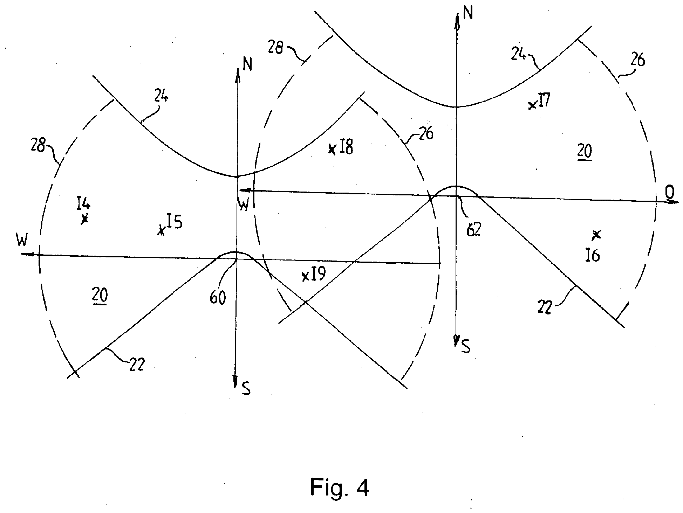

Um an den Immissionsorten I1, I2, I3 Belästigungen durch Schattenwurf zu vermeiden, ist die Windenergieanlage 10 mit einer automatisch arbeitenden Abschalteinrichtung 30 (Fig. 3) versehen. Die Abschalteinrichtung 30 kann nach Bedarf wahlweise für eine einzelne Windenergieanlage 10 konfiguriert werden, wie in Fig. 1 dargestellt. Alternativ kann die Abschalteinrichtung 30 auch für einen Windpark mit mehreren Windenergieanlagen 10 konfiguriert werden, wie in Fig. 4 beispielhaft für zwei Windenergieanlagen 10 dargestellt. Die Abschalteinrichtung 30 ist als Abschaltmodul konzipiert, das bei Bedarf in der Windenergieanlage 10 oder im Windpark 30 installiert werden kann, kann jedoch auch in die Anlagensteuerung integriert sein.

Die Abschalteinrichtung 30 umfasst einen oder mehrere Lichtsensoren 32, die in kurzen Zeitabständen, z.B. einer Minute, die Intensität der Sonnenstrahlung messen. Die Abschalteinrichtung 30 umfasst weiter einen Rechner 34, der aus den geografischen Koordinaten der Windenergieanlage 10 und jedes Immissionsortes I1, I2, I3 sowie der Lichtintensität der Sonnenstrahlung in kurzen Zeitabständen, z.B. einer Minute, für die aktuelle Uhrzeit berechnet, ob an einem der Immissionsorte I1, I2, I3 Schattenwurf verursacht werden kann.

Zu diesem Zweck berechnet der Rechner 34 mittels einer bekannten Software aus den geografischen Koordinaten der Windenergieanlage 10 oder Windenergieanlagen sowie der maßgeblichen Immissionsorte I1, I2, I3 für jeden dieser Orte, ob dort bei Sonnenschein Schattenwurf auftreten kann. Dabei berücksichtigt die Software den kalendarischen Sonnenaufgang, den kalendarischen Sonnenuntergang und der Bahn der Sonne 14 über den Himmel.

Die Abschalteinrichtung 30 umfasst einen Zähler 36 für die tägliche und für die jährliche Schattenwurfbelastung am jeweilige Immissionsort I1, I2, I3, der in kurzen Zeitabständen, z.B. einer Sekunde, vom Rechner 34 aktualisiert wird.

Wie in Fig. 3 dargestellt, ist die Abschalteinrichtung 30 darüber hinaus mit einem Modem 40 verbunden, das auch in die Abschalteinrichtung 30 integriert sein kann. Das Modem 40 ist an ein Telefonfestnetz 42 und an ein Mobilfunknetz 44 angeschlossen, so dass es mittels eines Telefons 46, eines Mobiltelefons 48 oder eines z.B. über WLAN 50 und ein Modem 52 an das Telefonfestnetz 42 angeschlossenen Endgeräts 56, z.B. ein Notebook, angerufen bzw. mittels eine Software oder App kontaktiert werden kann.

Die Abschalteinrichtung 30 umfasst einen Speicher 56, in dem für mindestens einen Teil der maßgeblichen Immissionsorte I1, I2, I3 im Umkreis der Windenergieanlage 10, d.h. innerhalb des Bereichs 20, eine oder mehrere Anruf-Kennungen zusammen mit dem jeweils zugehörigen Immissionsort I1, I2, I3 gespeichert sind. Bei den gespeicherten Anrufer-Kennungen kann es sich um Telefon- oder Mobilfunk-Anrufer-ID, d.h. die Rufnummer des Telefons 46 oder des Mobiltelefons 48 handeln, oder um Paare von Kennungen und Passwörtern, wenn das Modem 40 von einem als Smartphone ausgebildeten Mobiltelefon 48, einem PC oder einem Notebook 54 und einer auf dem Smartphone, PC oder Notebook 54 bzw. in einer Cloud gespeicherten Abschalt-Software oder Anwendung (App) kontaktiert werden soll.

Der Speicher 56 dient zudem zum Speichern des Zählerstandes des Zählers 36, sowie von Schattenwurf-Protokollen und weiteren Informationen für jeden Immissionsort I1, I2, I3, die später ggf. benötigt werden.

Im Folgenden wird das Verfahren zum Betreiben der Windenergieanlage 10 unter Bezugnahme auf Fig. 2 und 3 beschrieben.

Bei den in Fig. 2 dargestellten maßgeblichen Immissionsorten I1, I2, I3 im Umkreis der Windenergieanlage 10, d.h. innerhalb des Bereichs 20, handelt es sich beispielhaft um Wohngebäude 16, wie in Fig. 1 dargestellt.

Wenn die Windenergieanlage 10 an einem dieser Immissionsorte I1, I2, I3 Schattenwurf verursacht, der den dort lebenden Anwohner stört, ruft dieser von seinem Mobiltelefon 48 oder Telefon 46 über das Mobilfunknetz 44 oder das Telefonnetz 42 das Modem 40 an. Damit dem Anwohner keine Kosten entstehen, weist das Modem 40 den Anruf ab, leitet jedoch die Anrufer-Kennung, d.h. die beim Anruf mitübermittelte Rufnummer des Anrufers, zur Abschalteinrichtung 30 weiter. Der Rechner 34 der Abschalteinrichtung 30 vergleicht die Rufnummer mit den im Speicher 56 gespeicherten Rufnummern. Wenn es sich bei der Rufnummer um eine der gespeicherten Rufnummern handelt, ruft der Rechner 34 den zur Rufnummer zugehörigen Immissionsort I1, I2, I3 aus dem Speicher 56 ab und aktiviert für diesen Immissionsort I1, I2, I3 über einen einstellbaren Zeitraum, z.B. 24 Stunden, eine immissionsortbezogene Abschaltroutine im Rechner 34, z.B. für den Immissionsort I1.

Nach der Aktivierung der Abschaltroutine berechnet der Rechner 34 in kurzen Zeitabständen aus den geografischen Koordinaten der Windenergieanlage 10 und des betreffenden Immissionsortes I1, sowie der von dem oder den Lichtsensoren 32 gemessenen aktuellen Lichtintensität des Sonnenlichts, ob die Windenergieanlage 10 am betreffenden Immissionsort I1 Schattenwurf verursacht. Grundsätzlich kann die Berechnung jedoch auch ohne Berücksichtigung der Lichtintensität erfolgen.

Sofern die Berechnung z.B. ergibt, dass die Windenergieanlage 10 am Immissionsort I1 Schattenwurf verursacht, schaltet die Abschalteinrichtung 30 die Windenergieanlage sofort oder nach einer kurzen einstellbaren Verzögerung, z.B. 2 Minuten, ab. Die Berechnung wird fortgesetzt und die Windenergieanlage 10 wieder angefahren, sobald die Berechnung ergibt, dass am Immissionsort I1 kein Schattenwurf mehr verursacht wird.

Wenn im Tagesverlauf von keinem der beiden anderen Immissionsorte I2 und I3 ein Anruf beim Modem eingeht, wird von der Abschalteinrichtung 30 für die Immissionsorte I2 und I3 keine Abschaltroutine aktiviert. Das bedeutet, dass selbst dann keine Abschaltung der Windenergieanlage 10 ausgelöst wird, wenn der Zähler für diese Immissionsorte I2, I3 eine Überschreitung der genehmigten täglichen Schattenwurfbelastung anzeigt. In diesem Fall wird davon ausgegangen, dass an den Immissionsorten I2 und I3 entweder niemand anwesend ist oder sich niemand durch den Schattenwurf gestört fühlt.

Die Abschalteinrichtung 30 überwacht jedoch das Modem 40, um Störungen des Modems 40, Störungen der Kommunikation zwischen dem Modem 40 und dem Telefon- und/oder Mobilfunknetz 42, 44 oder Störungen des Telefon- und/oder Mobilfunknetzes 42, 44 zu erfassen.

Wenn eine solche Störung festgestellt wird, läuft die immissionsortbezogene Abschaltroutine für den Immissionsort I1, die bereits zuvor aktiviert worden ist, für den Rest des eingestellten Zeitraums weiter. Für die übrigen Immissionsorte I2 und I3 wird eine in der Abschalteinrichtung 30 gespeicherte vorprogrammierte Abschaltroutine aktiviert. Bei dieser Abschaltroutine wird die Windenergieanlage 10 abgeschaltet, wenn die Schattenwurfzeiten an den Immissionsorten I2 bzw. I3 die genehmigten Grenzwerte überschreiten, z.B. eine maximale Schattenwurfdauer von 30 Minuten pro Tag oder eine kumulierte Dauer von 8 Stunden pro Jahr.

Wenn mehrere Anrufe beim Modem 40 eingehen, vergleicht die Abschalteinrichtung 30 die Anrufer-Kennung jedes Anrufs mit den gespeicherten Kennungen. Wenn der Vergleich ergibt, dass eine oder mehrere der Anrufer-Kennungen im Speicher 56 gespeichert sind, ruft der Rechner 34 die zu jeder dieser Anrufer-Kennungen zugehörigen Immissionsorte I1, I2, I3 aus dem Speicher 56 ab und aktiviert für jeden dieser Immissionsorte I1, I2, I3 die zugehörige immissionsortbezogene Abschaltroutine. Die Abschaltroutine prüft danach für jeden der Immissionsorte I1, I2, I3 in kurzen Zeitabständen, ob die Windenergieanlage 10 dort Schattenwurf verursacht. Wenn die Windenergieanlage 10 an mindestens einem der Immissionsorte I1, I2, I3 Schattenwurf verursacht, wird die Windenergieanlage 10 abgeschaltet und erst dann wieder angefahren, wenn sie an keinem der Immissionsorte I1, I2, I3 mehr Schattenwurf verursacht.

Wenn der Vergleich ergibt, dass eine oder mehrere der Anrufer-Kennungen nicht im Speicher 56 gespeichert sind, wird der Anruf nebst Anrufer-Kennung protokolliert, jedoch wird weder eine Prüfung noch eine Abschaltroutine ausgelöst.

Die Aktivierung der immissionsortbezogenen Abschaltroutinen für einzelne Immissionsorte I1, I2, I3 wird ebenso wie die Zeiträume, in denen die Windenergieanlage 10 wegen Schattenwurfs abgeschaltet wird, und die Ursache der Abschaltung in einem Schattenwurfprotokoll protokolliert und im Speicher 56 gespeichert.

Sollte sich ein Anwohner, beispielsweise der Anwohner am Immissionsort I2, nicht mit dem beschriebenen Verfahren zum Betrieb der Windenergieanlage 10 einverstanden erklären, dann wird für diesen Immissionsort regelmäßig die vorprogrammierte Abschaltroutine aktiviert, die auch im Störungsfall aktiviert wird. In diesem Fall wird die Windenergieanlage 10 immer dann abgeschaltet, wenn für den Immissionsort I2 der genehmigte Grenzwert der täglichen oder jährlichen Schattenwurfbelastung überschritten wird. Für die übrigen Immissionsorte I1, I3 wird jedoch im Falle eines Anrufs die immissionsortbezogene Abschaltroutine aktiviert. Wenn von dort keine Anrufe eingehen, wird für die Immissionsorte I1, I3 keinerlei Abschaltung vorgenommen.

Fig. 4 zeigt zwei sich überlagernde Bereiche 20 im Umkreis von zwei benachbarten Windenergieanlagen 60, 62 und beispielhaft sechs Immissionsorte I4, I5, I6, I7, I8, I9. An einem Teil I4, I5 bzw. I6, I7 der Immissionsorte I4, I5, I6, I7, I8 und I9 verursacht jeweils nur die Windenergieanlage 60 bzw. 62 Schattenwurf, während an einem anderen Teil I8, I9 der Immissionsorte I4, I5, I6, I7, I8, I9 beide Windenergieanlagen 60 und 62 zu unterschiedlichen Tageszeiten Schattenwurf verursachen.

Das Verfahren zum Betrieb der Windenergieanlagen 60, 62 entspricht im Wesentlichen dem zuvor beschriebenen Verfahren. Wenn zum Beispiel vom Immissionsort I8 bzw. dem zugehörigen Mobiltelefon 48 oder Telefon 46 ein Anruf beim Modem 40 eingeht, jedoch kein Anruf vom Immissionsort I9 bzw. dem zugehörigen Mobiltelefon 48 oder Telefon 46 wird nach einem Abgleich mit den gespeicherten Anrufer-IDs für beide Windenergieanlagen 60, 62 für den Immissionsort I8 die immissionsortbezogene Abschaltroutine aktiviert. Dies bedeutet, dass jeweils die Windenergieanlage 60 und 62 abgeschaltet wird, die am Immissionsort I8 Schattenwurf verursacht, im vorliegenden Beispiel die Windenergieanlage 62 am Morgen und die Windenergieanlage 60 am Nachmittag. Andererseits wird keine der Windenergieanlagen 60 oder 62 abgeschaltet, wenn sie am Immissionsort I9 Schattenwurf verursacht, und zwar selbst dann nicht, wenn der genehmigte Grenzwert der täglichen oder jährlichen Schattenwurfbelastung überschritten wird.

Darüber hinaus wird jede einzelne der Windenergieanlagen 60, 62 durch einen Anruf eines Anwohners von einem der im Umkreis der Windenergieanlage 60bzw. 62 liegenden Immissionsorte I4, I5 bzw. I6, I7 abgeschaltet, wenn die Windenergieanlage 60 am betreffenden Immissionsort I4 oder I5 bzw. die Windenergieanlage 62 am betreffenden Immissionsort I6 bzw. I7 störenden Schattenwurf verursacht.

## Patentansprüche

1. Verfahren zum Betreiben von mindestens einer Windenergieanlage (10; 60, 62), wobei die mindestens eine Windenergieanlage (10; 60, 62) von einer Abschalteinrichtung (30) abgeschaltet wird, wenn sie an mindestens einem maßgeblichen Immissionsort (I1, I2, I3; I4, I5, I6, I7, I8, I9) im Umkreis der Windenergieanlage (10; 60, 62) Schattenwurf verursacht, wobei die Abschaltung der Windenenergieanlage (10; 60, 62) durch ein am maßgeblichen Immissionsort (I1, I2, I3; I4, I5, I6, I7, I8, I9) erzeugtes Signal ausgelöst wird, das über ein Telefon- oder Mobilfunknetz (42, 44) zu einem mit der Abschalteinrichtung (30) kommunizierenden Modem (40) übertragen wird, wobei das Signal als Anwohnersignal von einem Anwohner bedarfsgerecht erzeugt werden kann, wenn der Schattenwurf am Immissionsort (I1, I2, I3; I4, I5, I6, I7, I8, I9) vom Anwohner als störend empfunden wird, **dadurch gekennzeichnet, dass** das Anwohnersignal eine Kennung zur Identifizierung oder Authentifizierung des Anwohners umfasst, dass die Kennung mit einem Satz von gespeicherten Kennungen verglichen wird, und dass nur dann eine Abschaltung der Windenenergieanlage (10; 60, 62) ausgelöst wird, wenn es sich bei der Kennung um eine der gespeicherten Kennungen handelt und wobei die Kennungen zusammen mit dem jeweils zugehörigen Immissionsort (I1, I2, I3; I4, I5, I6, I7, I8, I9) in einem Speicher der Abschalteinrichtung (30) gespeichert sind, und dass nur dann eine Abschaltung der Windenenergieanlage (10; 60, 62) ausgelöst wird, wenn es sich bei der Kennung um eine der gespeicherten Kennungen handelt und wenn eine von einem Rechner (34) der Abschalteinrichtung (30) vorgenommene Berechnung ergibt, dass die Windenergieanlage (10; 60; 62) an dem zur Kennung zugehörigen Immissionsort (I1, I2, I3; I4, I5, I6, I7, I8, I9) Schattenwurf verursacht.

2. Verfahren nach Anspruch 1, **dadurch gekennzeichnet, dass** das Anwohnersignal vom Anwohner mittels eines Telefons (46), eines Mobiltelefons (48) oder einer Anruf-Software oder Anwendung (App) eines Endgeräts (56) erzeugt wird.

3. Verfahren nach einem der vorherigen Ansprüche, **dadurch gekennzeichnet, dass** aus den geografischen Koordinaten der Windenergieanlage (10; 60, 62) und des Immissionsortes (I1, I2, I3; I4, I5, I6, I7, I8, I9) sowie optional aus der aktuellen Lichtintensität der Sonnenstrahlung ermittelt wird, ob die Windenergieanlage (10; 60, 62) an dem zur Kennung zugehörigen Immissionsort (I1, I2, I3; I4, I5, I6, I7, I8, I9) Schattenwurf verursacht.

4. Verfahren nach einem der vorangehenden Ansprüche, **dadurch gekennzeichnet, dass** ein ordnungsgemäßes Funktionieren des Modems (40) und des Telefon- und/oder Mobilfunknetzes (42, 44) überwacht wird, und dass die Abschalteinrichtung (30) auf eine vorprogrammierte Abschaltroutine umschaltet, wenn kein ordnungsgemäßes Funktionieren festgestellt wird.

5. Verfahren nach einem der vorangehenden Ansprüche, **dadurch gekennzeichnet, dass** die Abschalteinrichtung (30) eine sofortige oder zeitverzögerte Abschaltung der Windenergieanlage (10) auslöst, wenn von mindestens einem (I1) von mehreren Immissionsorten (I1, I2, I3) ein Anwohnersignal zum Modem (40) übertragen wird und die Windenergieanlage (10) an dem mindestens einen Immissionsort (I1) Schattenwurf verursacht.

6. Verfahren nach einem der vorangehenden Ansprüche, **dadurch gekennzeichnet, dass** die Abschalteinrichtung (30) eine sofortige oder zeitverzögerte Abschaltung mehrerer Windenergieanlagen (60, 62) auslöst, wenn von mindestens einem (I9) von mehreren Immissionsorten (I4, I5, I6, I7, I8, I9) ein Anwohnersignal zum Modem (40) übertragen wird und die mehreren Windenergieanlagen (60, 62) an dem mindestens einen Immissionsort (I9) Schattenwurf verursachen.

7. Verfahren nach einem der vorangehenden Ansprüche, **dadurch gekennzeichnet, dass** durch das Anwohnersignal von einem maßgeblichen Immissionsort (I1, I2, I3; I4, I5, I6, I7, I8, I9) für eine feste oder einstellbare Zeitdauer für den maßgeblichen Immissionsort (I1, I2, I3; I4, I5, I6, I7, I8, I9) eine Abschaltroutine aktiviert wird, die eine sofortige oder zeitverzögerte Abschaltung der Windenergieanlage (10; 60, 62) auslöst, wenn die Windenergieanlage (10; 60, 62) am maßgeblichen Immissionsort (I1, I2, I3; I4, I5, I6, I7, I8, I9) Schattenwurf verursacht.

8. Verfahren nach Anspruch 7, **dadurch gekennzeichnet, dass** nach dem Eingang des Anwohnersignals berechnet wird, ob die Windenergieanlage (10; 60, 62) am maßgeblichen Immissionsort (I1, I2, I3; I4, I5, I6, I7, I8, I9) Schattenwurf verursacht, und dass eine Abschaltung der Windenergieanlage (10; 60, 62) ausgelöst wird, sobald dies der Fall ist.

9. Verfahren nach Anspruch 8, **dadurch gekennzeichnet, dass** die Berechnung laufend oder in kurzen Zeitabständen durchgeführt wird und dass die Windenergieanlage (10; 60, 62) wieder angefahren wird, sobald am maßgeblichen Immissionsort (I1, I2, I3; I4, I5, I6, I7, I8, I9) kein Schattenwurf mehr verursacht wird.

10. Verfahren nach einem der vorangehenden Ansprüche, **dadurch gekennzeichnet, dass** die Abschalteinrichtung (30) im Fall einer Überschreitung von Schattenwurfgrenzwerten am maßgeblichen Immissionsort (I2, I3; I9) keine Abschaltung der den Schattenwurf verursachenden Windenergieanlage (10; 60, 62) auslöst, wenn von diesem Immissionsort (I2, I3; I9) kein Anwohnersignal beim Modem (40) eingeht.

11. Verfahren nach einem der vorangehenden Ansprüche, **dadurch gekennzeichnet, dass** die Anwohnersignale und die Abschaltungen in einem Schattenwurfprotokoll erfasst werden.

12. Abschalteinrichtung (30) zur Abschaltung von mindestens einer Windenergieanlage (10; 60, 62), wenn diese an mindestens einem maßgeblichen Immissionsort (I1, I2, I3; I4, I5, I6, I7, I8, I9) im Umkreis der Windenergieanlage (10; 60, 62) Schattenwurf verursacht, wobei die Abschalteinrichtung (30) ein mit einem Telefon- und/oder Mobilfunknetz verbundenes Modem (40) umfasst und beim Empfang eines über das Telefon- oder Mobilfunknetz zum Modem (40) übertragenen Signals eine sofortige oder zeitverzögerte Abschaltung der Windenergieanlage (10; 60, 62) auslösen kann, wobei das Signal als Anwohnersignal von einem Anwohner bedarfsgerecht erzeugt werden kann, wenn der Schattenwurf am Immissionsort (I1, I2, I3; I4, I5, I6, I7, I8, I9) vom Anwohner als störend empfunden wird, wobei das Anwohnersignal eine Kennung zur Identifizierung oder Authentifizierung des Anwohners umfasst, **dadurch gekennzeichnet, dass** die Abschalteinrichtung (30) die Kennung mit einem Satz von Kennungen vergleicht, die zusammen mit dem jeweils zugehörigen Immissionsort in einem Speicher der Abschalteinrichtung (30) gespeichert sind, und dass die Abschalteinrichtung (30) nur dann eine Abschaltung der Windenenergieanlage (10; 60, 62) auslöst, wenn es sich bei der Kennung um eine der gespeicherten Kennungen handelt und wenn eine von einem Rechner (34) der Abschalteinrichtung (30) vorgenommene Berechnung ergibt, dass die Windenergieanlage (10; 60; 62) an dem zur Kennung zugehörigen Immissionsort (I1, I2, I3; I4, I5, I6, I7, I8, I9) Schattenwurf verursacht.

13. Windenergieanlage, **gekennzeichnet durch** eine Abschalteinrichtung nach Anspruch 12.

## Claims

1. Method for operating at least one wind turbine (10; 60, 62), wherein the at least one wind turbine (10; 60, 62) is shut down by a shutdown system (30) if it casts a shadow at at least one relevant immission location (11, I2, I3; I4, I5, I6, I7, I8, I9) in the vicinity of the wind turbine (10; 60, 62), wherein the shutdown of the wind turbine (10; 60, 62) is triggered by a signal that is generated at the relevant immission location ((I1, I2, I3; I4, I5, I6, I7, I8, I9) and is transmitted via a telephone or mobile network (42, 44) to a modem (40) in communication with the shutdown system (30), wherein the signal can be generated by a resident as a resident signal when required if the shadow cast at the immission location (11, I2, I3; I4, I5, I6, I7, I8, I9) is considered a nuisance by the resident, **characterised in that** the resident signal comprises an identifier to identify or authenticate the resident, the identifier is compared with a set of stored identifiers, and a shutdown of the wind turbine (10; 60, 62) is triggered only if the identifier is one of the stored identifiers, wherein the identifiers are stored together with the respective associated immission location (11, I2, I3; I4, I5, I6, I7, I8, I9) in a memory of the shutdown system (30), and a shutdown of the wind turbine (10; 60, 62) is triggered only if the identifier is one of the stored identifiers and if a calculation performed by a computer (34) of the shutdown system (30) shows that the wind turbine (10; 60, 62) is casting a shadow at the immission location (11, I2, I3; I4, I5, I6, I7, I8, I9) associated with the identifier.

2. Method according to claim 1, **characterised in that** the resident signal is generated by the resident using a telephone (46), a mobile telephone (48), or calling software or an application (app) of a terminal (56).

3. Method according to one of the preceding claims, **characterised in that** the geographic coordinates of the wind turbine (10; 60, 62) and of the immission location (11, I2, I3; I4, I5, I6, I7, I8, I9) and optionally the current light intensity of the solar radiation are used to establish whether the wind turbine (10; 60, 62) is casting a shadow at the immission location (11, I2, I3; I4, I5, I6, I7, I8, I9) associated with the identifier.

4. Method according to one of the preceding claims, **characterised in that** a proper functioning of the modem (40) and of the telephone and/or mobile network (42, 44) is monitored and that the shutdown system (30) switches to a preprogrammed shutdown routine if they are found not to be functioning properly.

5. Method according to one of the preceding claims, **characterised in that** the shutdown system (30) triggers an immediate or delayed shutdown of the wind turbine (10) if a resident signal is transmitted to the modem (40) by at least one (11) of a plurality of immission locations (11, I2, I3) and the wind turbine (10) is casting a shadow at the at least one immission location (11).

6. Method according to one of the preceding claims, **characterised in that** the shutdown system (30) triggers an immediate or delayed shutdown of a plurality of wind turbines (60, 62) if a resident signal is transmitted to the modem (40) by at least one (I9) of a plurality of immission locations (I4, I5, I6, I7, I8, I9) and the plurality of wind turbines (60, 62) are casting a shadow at the at least one immission location (I9).

7. Method according to one of the preceding claims, **characterised in that** the resident signal from a relevant immission location (11, I2, I3; I4, I5, I6, I7, I8, I9) activates a shutdown routine for the relevant immission location (11, I2, I3; I4, I5, I6, I7, I8, I9) for a fixed or adjustable duration which triggers an immediate or delayed shutdown of the wind turbine (10; 60, 62) if the wind turbine (10; 60, 62) is casting a shadow at the relevant immission location (11, I2, I3; I4, I5, I6, I7, I8, I9).

8. Method according to claim 7, **characterised in that** when the resident signal is received, a calculation is made as to whether the wind turbine (10; 60, 62) is casting a shadow at the relevant immission location (11, I2, I3; I4, I5, I6, I7, I8, I9) and a shutdown of the wind turbine (10; 60, 62) is triggered once that is found to be the case.

9. Method according to claim 8, **characterised in that** the calculation is performed continuously or at short intervals and the wind turbine (10; 60, 62) is started up again as soon as a shadow is no longer being cast at the relevant immission location (11, I2, I3; I4, I5, I6, I7, I8, I9).

10. Method according to one of the preceding claims, **characterised in that** if shadow casting limits are exceeded at the relevant immission location (I2, I3; I9), a shutdown of the wind turbine (10; 60, 62) casting the shadow is not triggered by the shutdown system (30) if no resident signal from this immission location (I2, I3; I9) is received at the modem (40).

11. Method according to one of the preceding claims, **characterised in that** the resident signals and the shutdowns are recorded in a shadow log.

12. Shutdown system (30) for shutting down at least one wind turbine (10; 60, 62) if it casts a shadow at at least one relevant immission location (11, I2, I3; I4, I5, I6, I7, I8, I9) in the vicinity of the wind turbine (10; 60, 62), wherein the shutdown system (30) comprises a modem (40) connected to a telephone and/or mobile network and can trigger an immediate or delayed shutdown of the wind turbine (10; 60, 62) on receipt of a signal transmitted to the modem (40) via the telephone or mobile network, wherein the signal can be generated by a resident as a resident signal when required if the shadow cast at the immission location (11, I2, I3; I4, I5, I6, I7, I8, I9) is considered a nuisance by the resident, wherein the resident signal comprises an identifier to identify or authenticate the resident, **characterised in that** the shutdown system (30) compares the identifier with a set of identifiers which are stored together with the respective associated immission location in a memory of the shutdown system (30), and the shutdown system (30) triggers a shutdown of the wind turbine (10; 60, 62) only if the identifier is one of the stored identifiers and if a calculation performed by a computer (34) of the shutdown system (30) shows that the wind turbine (10; 60, 62) is casting a shadow at the immission location (11, I2, I3; I4, I5, I6, I7, I8, I9) associated with the identifier.

13. Wind turbine **characterised by** a shutdown system according to claim 12.

## Revendications

1. Procédé pour faire fonctionner au moins une éolienne (10 ; 60, 62), dans lequel l'au moins une éolienne (10 ; 60, 62) est arrêtée par un dispositif d'arrêt (30) lorsqu'elle provoque, sur au moins un lieu d'immission (11, I2, I3 ; I4, I5, I6, I7, I8, I9) majeur, des projections d'ombre dans les alentours de l'éolienne (10 ; 60, 62), dans lequel l'arrêt de l'éolienne (10 ; 60, 62) est déclenché par un signal généré sur le lieu d'immission (11, I2, I3 ; I4, I5, I6, I7, I8, I9) majeur, qui est transmis par l'intermédiaire d'un réseau de téléphonie ou de radiotéléphonie (42, 44) à un modem (40) communiquant avec le dispositif d'arrêt (30), dans lequel le signal peut être généré selon les besoins par un riverain en tant que signal de riverain lorsque les projections d'ombre sur le lieu d'immission (11, I2, I3 ; I4, I5, I6, I7, I8, I9) sont perçues comme incommodantes par le riverain, **caractérisé en ce que** le signal de riverain comprend un code pour identifier ou authentifier le riverain, que le code est comparé à un ensemble de codes mémorisés, et qu'alors un arrêt de l'éolienne (10 ; 60, 62) n'est déclenché que lorsque le code est un des codes mémorisés et dans lequel les codes sont mémorisés conjointement avec le lieu d'immission (11, I2, I3 ; I4, I5, I6, I7, I8, I9) respectivement associé dans une mémoire du dispositif d'arrêt (30), et qu'alors un arrêt de l'éolienne (10 ; 60, 62) n'est déclenché que lorsque le code est un des codes mémorisés et qu'un calcul réalisé par un ordinateur (34) du dispositif d'arrêt (30) en découle, que l'éolienne (10 ; 60 ; 62) provoque des projections d'ombre sur le lieu d'immission (11, I2, I3 ; I4, I5, I6, I7, I8, I9) associé au code.

2. Procédé selon la revendication 1, **caractérisé en ce que** le signal de riverain est généré par le riverain au moyen d'un téléphone (46), d'un téléphone mobile (48) ou d'un logiciel d'appel ou d'une application (App) d'un terminal (56).

3. Procédé selon l'une quelconque des revendications précédentes, **caractérisé en ce qu'**il est déterminé à partir des coordonnées géographiques de l'éolienne (10 ; 60, 62) et du lieu d'immission (11, I2, I3 ; I4, I5, I6, I7, I8, I9) ainsi qu'en option à partir de l'intensité lumineuse instantanée des rayons du soleil si l'éolienne (10 ; 60, 62) provoque des projections d'ombre sur le lieu d'immission (11, I2, I3 ; I4, I5, I6, I7, I8, I9) associé au code.

4. Procédé selon l'une quelconque des revendications précédentes, **caractérisé en ce qu'**un fonctionnement en bonne et due forme du modem (40) et du réseau de téléphonie et/ou de radiotéléphonie (42, 44) est surveillé, et que le dispositif d'arrêt (30) passe sur une routine d'arrêt préprogrammée lorsqu'aucun fonctionnement en bonne et due forme n'est constaté.

5. Procédé selon l'une quelconque des revendications précédentes, **caractérisé en ce que** le dispositif d'arrêt (30) déclenche un arrêt immédiat ou différé de l'éolienne (10) lorsqu'un signal de riverain est transmis au modem (40) depuis au moins un (11) de plusieurs lieux d'immission (11, I2, I3) et que l'éolienne (10) provoque des projections d'ombres sur l'au moins un lieu d'immission (11).

6. Procédé selon l'une quelconque des revendications précédentes, **caractérisé en ce que** le dispositif d'arrêt (30) déclenche un arrêt immédiat ou différé de plusieurs éoliennes (60, 62) lorsqu'un signal de riverain est transmis au modem (40) depuis au moins un (I9) des plusieurs lieux d'immission (I4, I5, I6, I7, I8, I9) et que les plusieurs éoliennes (60, 62) provoquent des projections d'ombre sur l'au moins un lieu d'immission (I9).

7. Procédé selon l'une quelconque des revendications précédentes, **caractérisé en ce qu'**est activée, par le signal de riverain, depuis un lieu d'immission (11, I2, I3 ; I4, I5, I6, I7, I8, I9) majeur, pendant une durée fixe ou réglable pour le lieu d'immission (11, I2, I3 ; I4, I5, I6, I7, I8, I9) majeur, une routine d'arrêt, qui déclenche un arrêt immédiat ou différé de l'éolienne (10 ; 60, 62) lorsque l'éolienne (10 ; 60, 62) provoque des projections d'ombre sur le lieu d'immission (11, I2, I3 ; I4, I5, I6, I7, I8, I9) majeur.

8. Procédé selon la revendication 7, **caractérisé en ce qu'**il est calculé à réception du signal de riverain si l'éolienne (10 ; 60, 62) provoque des projections d'ombre sur le lieu d'immission (11, I2, I3 ; I4, I5, I6, I7, I8, I9) majeur, et qu'un arrêt de l'éolienne (10 ; 60, 62) est déclenché dès que cela est le cas.

9. Procédé selon la revendication 8, **caractérisé en ce que** le calcul est mis en oeuvre en continu ou à de courts intervalles de temps, et que l'éolienne (10 ; 60, 62) est redémarrée dès que plus aucune projection d'ombre n'est provoquée sur le lieu d'immission (11, I2, I3 ; I4, I5, I6, I7, I8, I9) majeur.

10. Procédé selon l'une quelconque des revendications précédentes, **caractérisé en ce que** le dispositif d'arrêt (30) ne déclenche aucun arrêt de l'éolienne (10 ; 60, 62) provoquant les projections d'ombre dans le cas d'un dépassement de valeurs limites de projection d'ombre sur le lieu d'immission (I2, I3 ; I9) majeur lorsqu'aucun signal de riverain n'arrive sur le modem (40) depuis ledit lieu d'immission (I2, I3 ; I9).

11. Procédé selon l'une quelconque des revendications précédentes, **caractérisé en ce que** les signaux de riverain et les arrêts sont comptabilisés dans un procès-verbal de projections d'ombre.

12. Dispositif d'arrêt (30) pour arrêter au moins une éolienne (10 ; 60, 62) lorsque celle-ci provoque des projections d'ombre dans les alentours de l'éolienne (10 ; 60, 62) sur au moins un lieu d'immission (11, I2, I3 ; I4, I5, I6, I7, I8, I9) majeur, dans lequel le dispositif d'arrêt (30) comprend un modem (40) raccordé à un réseau de téléphonie et/ou de radiotéléphonie et peut déclencher un arrêt immédiat ou différé de l'éolienne (10 ; 60, 62) à réception d'un signal transmis par l'intermédiaire du réseau de téléphonie et/ou de radiotéléphonie au modem (40), dans lequel le signal peut être généré selon les besoins par un riverain en tant que signal de riverain lorsque les projections d'ombre sont perçues par le riverain comme incommodantes sur le lieu d'immission (11, I2, I3 ; I4, I5, I6, I7, I8, I9), dans lequel le signal de riverain comprend un code pour identifier ou authentifier le riverain, **caractérisé en ce que** le dispositif d'arrêt (30) compare le code à un ensemble de codes qui sont mémorisés conjointement avec le lieu d'immission respectivement associé dans une mémoire du dispositif d'arrêt (30), et que le dispositif d'arrêt (30) ne déclenche alors un arrêt de l'éolienne (10 ; 60, 62) que lorsque le code est un des codes mémorisés et qu'un calcul réalisé par un calculateur (34) du dispositif d'arrêt (30) en découle, que l'éolienne (10 ; 60, 62) provoque des projections d'ombre sur le lieu d'immission (11, 12, I3 ; I4, I5, I6, I7, I8, I9) associé au code.

13. Eolienne, **caractérisée par** un dispositif d'arrêt selon la revendication 12.
